# EUROPEAN PATENT SPECIFICATION

(11) **EP 3 666 529 B1**
(45) Date of publication and mention of the grant of the patent: **15.06.2022**
(21) Application number: 19192561.9
(22) Date of filing: 20.08.2019
(51) Int. Cl.: B41J 2/32, B41J 2/325, B41J 3/407, G06K 1/12, G06K 3/00, G06K 7/015, G06K 7/10, G06K 17/00

(54) **RFID PRINTER APPARATUS**
RFID-DRUCKVORRICHTUNG
APPAREIL D'IMPRIMANTE RFID

(30) Priority: 14.12.2018 JP 2018234005
(43) Date of publication of application: 17.06.2020
(73) Proprietor: Toshiba Tec Kabushiki Kaisha, Shinagawa-ku Tokyo 141-0032 (JP)
(72) Inventor: Mochida, Yasuhiko, Tokyo, 141-8562 (JP)
(74) Representative: Hoffmann Eitle

(56) References cited:
- EP-A1- 1 674 272
- EP-A1- 1 837 810
- US-A1- 2012 057 200
- US-A1- 2015 199 594

## Description

### CROSS-REFERENCE TO RELATED APPLICATION

This application is based upon and claims the benefit of priority from Japanese Patent Application No. 2018-234005, filed in December 14, 2018.

### FIELD

Embodiments described herein relate generally to an RFID printer apparatus.

### BACKGROUND

In the related art, a thermal printer including an adjustment mechanism that adjusts a head pressure at which a thermal head is pressed against a platen roller according to the thickness of a printing medium is known (for example, JP-A-2009-179009) .

However, in this example of the related art, since the mechanism for adjusting the head pressure is provided, a structure of the thermal printer is complicated, and there is a problem in that the costs increase.

EP 1674272 A1 relates to a printer having a feed unit to feed a label or tag containing an RFID tag, a print unit to print on the surface of the label or tag, and an RFID read/write unit to read/write the RFID tag. The printer has a control unit to control the RFID read/write unit to write data to the RFID tag while the feed unit is feeding the RFID tag.

US 20120057200 A1 relates to a printer including a loading unit configured to load a first printing medium including IC tags, which are data-readable/writable by wireless connection, and a printing surface formed on one side of the first printing medium. A conveying unit of the printer conveys the first printing medium, which is being drawn from the loader, along a conveyance path. A wireless reader/writer of the printer is configured to read/write data from/on the IC tags by wireless data communication between the IC tags provided in the first printing medium in the course of conveying the first printing medium. A control unit of the printer, at a point of time when printing on the first printing medium is completed, controls the wireless reader/writer to write information on the number of printing media printed on an IC tag included in a second printing medium subsequent to the first printing medium.

### SUMMARY OF THE INVENTION

One of the objects of the present invention is to improve prior art techniques and overcome at least some of the prior art problems as for instance above illustrated.

The object of the invention is achieved by the subject-matter of the independent claim. Advantageous embodiments are defined in the dependent claims. Further examples are provided for facilitating the understanding of the invention.

### DESCRIPTION OF THE DRAWINGS

FIGS. 1A and 1B are structural diagrams illustrating an example of a schematic structure of an RFID printer apparatus according to an example;
FIGS. 2A and 2B are appearance diagrams illustrating an example of a label mount;
FIG. 3 is a hardware block diagram illustrating an example of a hardware configuration of the RFID printer apparatus;
FIG. 4 is a functional block diagram illustrating an example of a functional configuration of the RFID printer apparatus;
FIG. 5 is a diagram illustrating an example of label information that is printed by the RFID printer apparatus;
FIG. 6 is a schematic diagram illustrating a main structure of a thermal head;
FIG. 7 is a flowchart illustrating an example of a flow of a printing process that is executed by the RFID printer apparatus; and
FIG. 8 is a flowchart illustrating an example of a flow of a dot missing check that is executed by the RFID printer apparatus .

### DETAILED DESCRIPTION

Examples provide an RFID printer apparatus capable of printing label information on a position of an RFID tag other than a mounting position of a thick RFID chip with a simple structure, the RFID chip being embedded in the RFID tag.

In general, an RFID printer apparatus is configured to arrange a plurality of RFID tags mounted with an RFID chip in an aligned state and print pattern information on each of the RFID tags while conveying the RFID tags in a predetermined conveying direction, and includes a thermal head in which a plurality of heating elements are provided along a direction orthogonal to the conveying direction. The RFID printer apparatus includes acquisition means, reception means, and print control means. The acquisition means is configured to acquire a mounting position of the RFID chip in the RFID tag. The reception means is configured to receive label information including the pattern information and a print position of the pattern information. The print control means is configured to print the pattern information on the RFID tag on a condition that the print position of the pattern information that is received by the reception means does not overlap a region where the RFID chip passes through the RFID tag when the RFID chip mounted on the mounting position that is acquired by the acquisition means moves along the conveying direction.

Hereinafter, an example will be described with reference to the accompanying drawings.

### Schematic Configuration of Label Printer

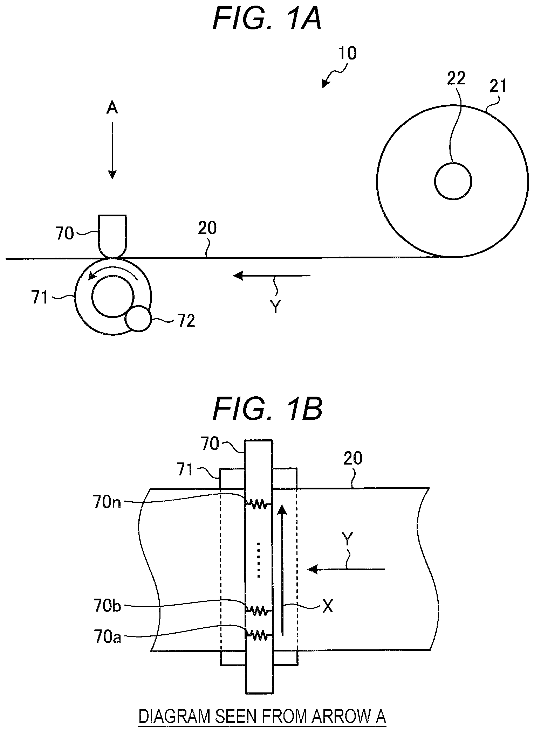

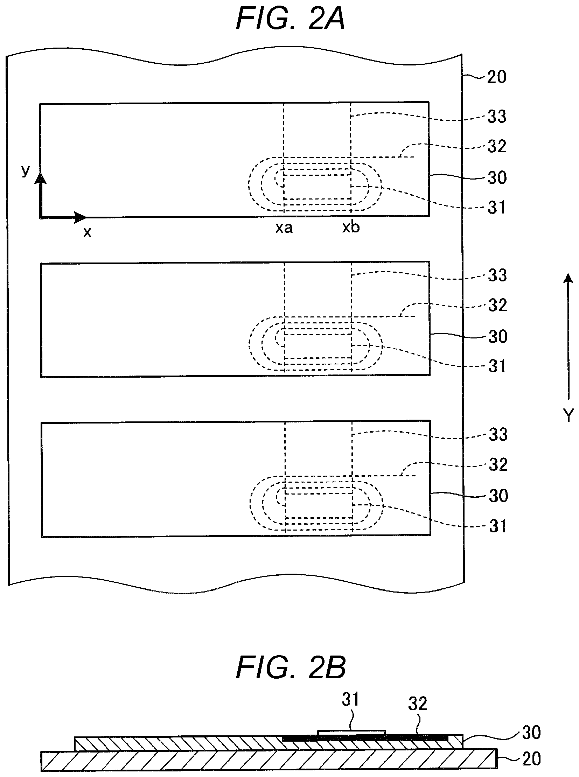

FIGS. 1A and 1B are structural diagrams illustrating an example of a schematic structure of an RFID printer apparatus 10 . The RFID printer apparatus 10 is a printer that is used in a supermarket or the like and prints label information or the like on an RFID label 30 (refer to FIGS. 2A and 2B) attached to a commodity. As illustrated in FIG. 1A, the RFID printer apparatus 10 includes a thermal head 70, a platen roller 71, and a stepping motor 72.

A plurality of RFID labels 30 (refer to FIG. 2A and 2B) as printing media are attached to a label mount 20 in an aligned state. A roll 21 around which the label mount 20 is wound is accommodated in a paper holding portion (not illustrated) provided in the RFID printer apparatus 10 in a state where the roll 21 is rotatable around a roll shaft 22 and is attachable to and detachable from the paper accommodation portion.

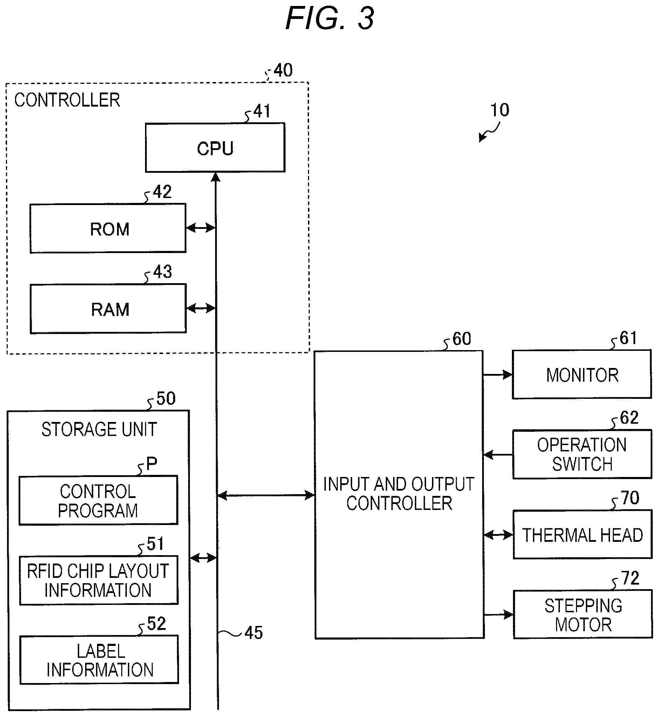

The stepping motor 72 is a drive source for rotating the platen roller 71. The stepping motor 72 is driven by a control signal from an input and output controller 60 (refer to FIG. 3) described below and rotatably drives the platen roller 71 through a gear or the like. Due to the rotatably driving of the platen roller 71, the label mount 20 is drawn out from the roll 21 and conveyed (fed) along a conveying direction (sub-scanning direction) Y.

FIG. 1B is a diagram illustrating FIG. 1A when seen from a direction indicated by an arrow A. As illustrated in FIG. 1B, the thermal head 70 is provided along a direction orthogonal to the conveying direction Y. In the thermal head 70, a plurality of heating elements 70a to 70n are arranged in a row along a main scanning direction X orthogonal to the conveying direction Y. The label mount 20 is pressurized from the thermal head 70 and the platen roller 71 while being conveyed through a conveyance path between the thermal head 70 and the platen roller 71.

The heating elements 70a to 70n included in the thermal head 70 selectively generate heat according to a control signal from the input and output controller 60 (refer to FIG. 3) described below. The thermal head 70 prints label information on the RFID label 30 along the main scanning direction X by generating heat from a heating element provided at a position corresponding to the label information to be printed among the conveyed RFID labels 30. The RFID label 30 on which the label information is printed is discharged from a paper discharge port (not illustrated) along with the label mount 20.

### Configuration of Label Mount

FIGS. 2A and 2B are appearance diagrams illustrating an example of the label mount 20. In particular, FIG. 2A is a top view illustrating the label mount 20. FIG. 2B is a cross-sectional view illustrating the label mount 20. As illustrated in FIGS. 2A and 2B, the plurality of RFID labels 30 are arranged on the label mount 20 in an aligned state at predetermined intervals. Specifically, the RFID labels 30 are arranged on the surface of the label amount 20 in a state that back surfaces of the RFID labels 30 are releasable from the surface of the label amount 20. In order to specify a coordinate position on the RFID label 30, an x-axis along the main scanning direction X and a y-axis along the conveying direction Y are set. A coordinate position on the RFID label 30 is represented by (x, y) . An origin position in the xy coordinate system may be freely set. Here, as illustrated in FIG. 2A, a position on the lower left side of the RFID label 30 is set as an origin.

The RFID label 30 is heat-sensitive paper that is colored by heat generated from the thermal head 70. An RFID chip 31 and an antenna 32 are mounted on the RFID label 30. The RFID label 30 is an example of the RFID tag.

The RFID chip 31 is an IC (Integrated Circuit) chip that stores commodity information or the like of a commodity to which the RFID label 30 having the RFID chip 31 mounted thereon is attached. In the RFID label 30 illustrated in FIG. 2A, a mounting position of the RFID chip 31 in the x-axis direction is in a range of an x-axis direction position xa to an x-axis direction position xb. This mounting position does not change without depending on the RFID label 30 arranged on the label mount 20.

The antenna 32 receives a radio wave from a reader and writer and activates the RFID chip 31. In addition, the antenna 32 transmits information such as commodity information registered in the RFID chip 31 to the reader and writer. The antenna 32 is formed by performing an etching process on a flexible substrate or the like.

As illustrated in FIG. 2B, the RFID chip 31 is thicker than the antenna 32, and thus is mounted to protrude from the surface of the RFID label 30. Accordingly, when the RFID printer apparatus 10 executes printing on the RFID label 30, the thermal head 70 may come into contact with the RFID chip 31.

The mounting position of the RFID chip 31 on the RFID label 30 is substantially determined depending on stores. Therefore, in the RFID printer apparatus 10 according to the present embodiment, it is assumed that the thermal head 70 comes into contact with the RFID chip 31 during printing. When the thermal head 70 comes into contact with the RFID chip 31, among the heating elements 70a to 70n, a heating element with that comes into contact with the RFID chip 31 may be damaged by disconnection. Therefore, in the present embodiment, among the heating elements 70a to 70n, printing is not executed on a heating element that may come into contact with the RFID chip 31. Even when the heating element is disconnected, the operation of the RFID printer apparatus 10 continues.

### Hardware Configuration of RFID Printer Apparatus

FIG. 3 is a hardware block diagram illustrating an example of a hardware configuration of the RFID printer apparatus 10 .

The RFID printer apparatus 10 includes a controller 40, a storage unit 50, and the input and output controller 60.

The controller 40 includes a central processing unit (CPU) 41, a read only memory (ROM) 42, and a random access memory (RAM) 43. The CPU 41 is connected to the ROM 42 and the RAM 43 through a bus line 45. The CPU 41 loads various programs stored in the ROM 42 or the storage unit 50 to the RAM 43. The CPU 41 controls the RFID printer apparatus 10 by operating in accordance with the programs loaded to the RAM 43. That is, the controller 40 has a configuration of a general computer.

Further, the controller 40 is connected to the storage unit 50 and the input and output controller 60 through the bus line 45.

For example, the storage unit 50 is a nonvolatile memory such as a flash memory or a hard disk drive (HDD) that stores storage information even after the power is turned off. The storage unit 50 stores programs including a control program P or the like. The control program P is a program for exhibiting a function of the RFID printer apparatus 10.

The control program P may be provided after being previously embedded in the ROM 42. In addition, the control program P may be provided after being recorded in a computer-readable recording medium such as a CD-ROM, a flexible disk (FD), a CD-R, or a digital versatile disc (DVD) in a file format that is installable or executable in the controller 40. In addition, the control program P may be provided by storing the program in a computer connected to a network such as the Internet and downloading the program through the network. In addition, the control program P may be provided or distributed through a network such as the Internet.

In addition, the storage unit 50 stores RFID chip layout information 51 and label information 52.

The RFID chip layout information 51 is information representing a mounting position of the RFID chip 31 in the RFID label 30 (RFID tag) . The RFID chip layout information 51 includes, for example, information that is predetermined per the roll 21.

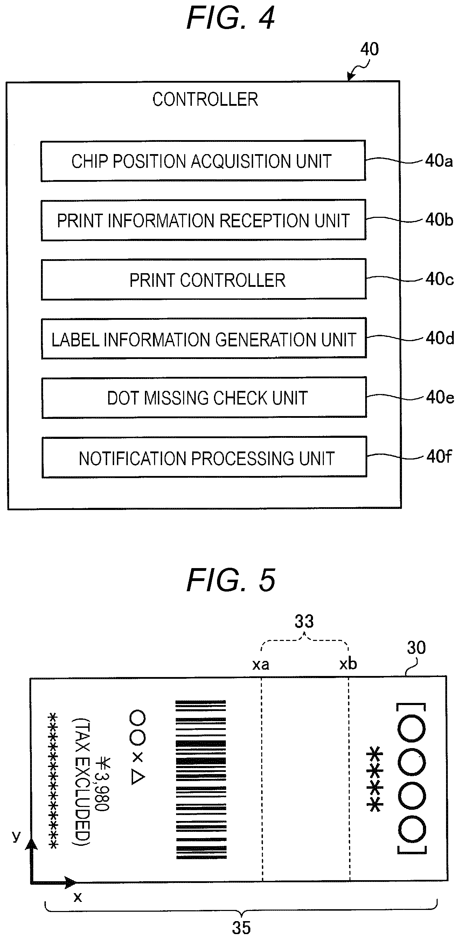

The label information 52 includes pattern information 35 (refer to FIG. 5) to be printed on the RFID label 30 and a print position of the pattern information 35.

The input and output controller 60 is connected to a monitor 61 and an operation switch 62. In addition, the input and output controller 60 is connected to the thermal head 70 and the stepping motor 72. The input and output controller 60 controls various types of connected hardware in accordance with an instruction from the controller 40.

The monitor 61 displays the pattern information 35 to be printed on the RFID label 30, various buttons for controlling the operation of the RFID printer apparatus 10, the result of a dot missing check of the RFID printer apparatus 10, and the like. The monitor 61 is, for example, a liquid crystal display.

The operation switch 62 is, for example, a touch panel that is provided to overlap the monitor 61. The touch panel detects operation information of an operator with respect to the various buttons displayed on the monitor 61 and transmits information corresponding to the operation information to the controller 40. The operation switch 62 is not limited to a touch panel and may be, for example, a mechanical switch provided in a main body of the RFID printer apparatus 10.

The thermal head 70 causes the heating elements 70a to 70n corresponding to the pattern information 35 to selectively generate heat according to the pattern information 35 to be printed on the RFID label 30 based on an instruction from the input and output controller 60. As a result, the pattern information 35 is printed on the RFID label 30.

The stepping motor 72 is driven based on an instruction from the input and output controller 60 to rotate the platen roller 71. Due to the rotation of the platen roller 71, the label mount 20 is conveyed along the conveying direction Y.

### Functional Configuration of Controller

FIG. 4 is a functional block diagram illustrating an example of a functional configuration of the RFID printer apparatus 10 . The controller 40 of the RFID printer apparatus 10 implements a chip position acquisition unit 40a, a print information reception unit 40b, a print controller 40c, a label information generation unit 40d, a dot missing check unit 40e, and a notification processing unit 40f illustrated in FIG. 4, as functional units by loading the control program P to the RAM 43 and executes the control program P.

The chip position acquisition unit 40a acquires the mounting position of the RFID chip 31 in the RFID label 30 (RFID tag). The chip position acquisition unit 40a is an example of the acquisition unit.

The print information reception unit 40b receives the label information 52 including the pattern information 35 and the print position of the pattern information 35. The label information may be information stored in the storage unit 50 or may be information generated by the label information generation unit 40d described below. The print information reception unit 40b is an example of the reception unit.

In addition, the print information reception unit 40b causes the notification processing unit 40f to execute notification and inhibits the print controller 40c from printing the pattern information 35 on a condition that the print position of the received pattern information 35 overlaps a region where the RFID chip 31 passes through the RFID label 30 when the RFID chip 31 mounted on the mounting position that is acquired by the chip position acquisition unit 40a moves along the conveying direction Y.

In addition, the print controller 40c prints the pattern information 35 on the RFID label 30 on a condition that the print position of the pattern information 35 received by the print information reception unit 40b does not overlap the region where the RFID chip 31 passes through the RFID label 30 when the RFID chip 31 mounted on the mounting position that is acquired by the chip position acquisition unit 40a moves along the conveying direction Y. The print controller 40c is an example of the print control unit.

The print controller 40c executes necessary printing by converting the print position of the pattern information 35 into positions of the heating elements 70a to 70n. Specifically, a correspondence table in which the print position in the RFID label 30 is associated with the positions of the heating elements 70a to 70n is created in advance and is stored in, for example, the ROM 42. During printing, the print controller 40c reads the correspondence table from the ROM 42, reads the print position of the pattern information 35, and then converts the print position of the pattern information 35 into the positions of the heating elements 70a to 70n based on the correspondence table.

The label information generation unit 40d generates the label information 52 (the pattern information 35 and the print position of the pattern information 35). The label information generation unit 40d is an example of the generation unit.

In addition, the label information generation unit 40d causes the notification processing unit 40f to execute notification on a condition that the print position of the generated pattern information 35 overlaps the region where the RFID chip 31 passes through the RFID label 30 when the RFID chip 31 mounted on the mounting position that is acquired by the chip position acquisition unit 40a moves along the conveying direction Y.

The dot missing check unit 40e execute a dot missing check (disconnection check) of the thermal head 70 by checking states of the plurality of heating elements 70a to 70n. The dot missing check unit 40e skips reading of a result of a dot missing check on each of the heating elements 70a to 70n at a position corresponding to the mounting position of the RFID chip 31 that is acquired by the chip position acquisition unit 40a. Alternatively, the dot missing check unit 40e does not execute a dot missing check on each of the heating elements 70a to 70n at a position corresponding to the mounting position of the RFID chip 31 that is acquired by the chip position acquisition unit 40a. The dot missing check unit 40e is an example of the check unit.

The notification processing unit 40f executes notification according to an instruction from the print information reception unit 40b or the label information generation unit 40d. Specifically, the notification processing unit 40f calls attention to a user of the RFID printer apparatus 10 by displaying a message that the pattern information 35 overlaps a print preventing region 33 described below on the monitor 61. The notification processing unit 40f is an example of the notification unit.

### Label information

FIG. 5 is a diagram illustrating an example of the label information that is printed by the RFID printer apparatus 10. As illustrated in FIG. 5, the pattern information 35 is printed on the RFID label 30. The pattern information 35 includes commodity information and the like.

In FIG. 5, the range of an x-axis direction position xa to an x-axis direction position xb in the RFID label 30 is the print preventing region 33. As described above, the print preventing region 33 is the region where the RFID chip 31 passes when moving along the conveying direction Y (FIG. 2). That is, the x-axis direction position xa is a left end position of the RFID chip 31. In addition, the x-axis direction position xb is a right end position of the RFID chip 31. As described above, the print preventing region 33 is set based on the mounting position of the RFID chip 31 that is acquired by the chip position acquisition unit 40a.

The thermal head 70 prints the pattern information 35 on a region of the RFID label 30 other than the print preventing region 33.

### Dot Missing Check Method

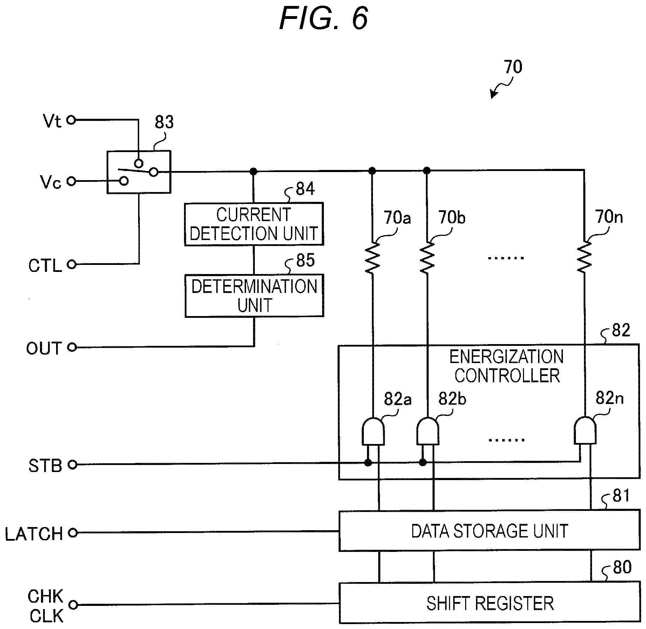

FIG. 6 is a schematic diagram illustrating a main structure of the thermal head 70. As illustrated in FIG. 6, the thermal head 70 includes a shift register 80, a data storage unit 81, an energization controller 82, the heating elements 70a to 70n, a voltage selection unit 83, a current detection unit 84, and a determination unit 85. Among these, the shift register 80, the data storage unit 81, and the energization controller 82 are components for executing a print control by individually turning on or off the heating elements 70a to 70n. The voltage selection unit 83, the current detection unit 84, and the determination unit 85 are components required for executing the dot missing check in cooperation with the shift register 80, the data storage unit 81, and the energization controller 82.

The shift register 80 generates a signal for specifying a heating element that is a target for the dot missing check. Specifically, a check signal CHK as a serial signal for specifying the heating element that is input from the controller 40 through the input and output controller 60 is converted into a parallel signal by shifting the check signal CHK to a position of a signal line one-to-one corresponding to the heating element to be checked using a clock pulse CLK.

The data storage unit 81 temporarily stores the check signal CHK that is converted into the parallel signal by the shift register 80 using a latch signal LATCH that is input from the controller 40 through the input and output controller 60.

The energization controller 82 is configured with, for example, AND gates 82a to 82n and causes the heating elements 70a to 70n to selectively generate heat using a strobe signal STB (for example, a TTL signal) that is input from the controller 40 through the input and output controller 60. Specifically, at a timing at which the heating elements 70a to 70n selectively generate heat, a strobe signal STB having a voltage of 5 V (a Hi level of a TTL signal) is input. At this time, the check signal CHK (a Hi level of a TTL signal) is supplied from the data storage unit 81 to an AND gate corresponding to the heating element that selectively generates heat. Accordingly, a voltage of 5 V is output from only the AND gate corresponding to the heating element that is a target for the dot missing check. As a result, only the selected heating element generates heat. Although not illustrated in FIG. 6, in general, a switching element such as a transistor that executes a switching operation based on an output of the AND gate is mounted on a rear stage of the AND gates 82a to 82n. By the switching element executing the switching operation, a current flows through the selected heating element to generate heat.

The voltage selection unit 83 switches between a voltage applied to the thermal head 70 when the thermal head 70 executes a normal printing operation and a voltage applied to the thermal head 70 when the thermal head 70 executes the dot missing check. The voltage selection unit 83 is configured with, for example, a selector and switches between a voltage Vc (for example, 24 V) applied during the normal printing operation and a voltage Vt (for example, 5 V) applied during the dot missing check in accordance with a control signal CTL that is input from the controller 40 through the input and output controller 60.

The current detection unit 84 detects the magnitude of the current flowing through the heating element that is the target for the dot missing check. Specifically, the current detection unit 84 detects the current flowing through the heating element as a check target using the applied voltage Vt. The current detection unit 84 calculates a resistance value of the heating element based on the detected current.

The determination unit 85 determines whether or not dot missing occurs in the heating element as a check target based on the resistance value of the heating element that is calculated by the current detection unit 84. The determination unit 85 outputs the determination result to, for example, the monitor 61 as a determination signal OUT.

The dot missing check unit 40e (refer to FIG. 4) executes the dot missing check by checking the respective states of the plurality of heating elements 70a to 70n included in the thermal head 70 illustrated in FIG. 6 at a predetermined timing. The predetermined timing refers to, for example, a timing at which the power of the RFID printer apparatus 10 is turned on.

When each of the heating elements 70a to 70n receives an impact from the outside, a resistor element constituting the heating element is damaged or is broken (disconnected) in some cases. In this case, the resistance value of each of the heating elements 70a to 70n changes from a resistance value in a normal situation. In particular, when the resistor element is broken, the resistance value becomes infinite. The dot missing check unit 40e calculates the resistance value of each of the heating elements 70a to 70n by detecting a current value flowing when a predetermined voltage is applied to each of the heating elements 70a to 70n. When a difference between the calculated resistance value and the resistance value in a normal situation is higher than or equal to a predetermined value, the dot missing check unit 40e determines that dot missing occurs.

The reason why the voltage applied during the dot missing check is set to be low by the voltage selection unit 83 is that the amount of heat generated from the heating elements 70a to 70n is adjusted to be low so that, even when the heating elements 70a to 70n generate heat, the RFID label 30 is not colored.

### Flow of Printing

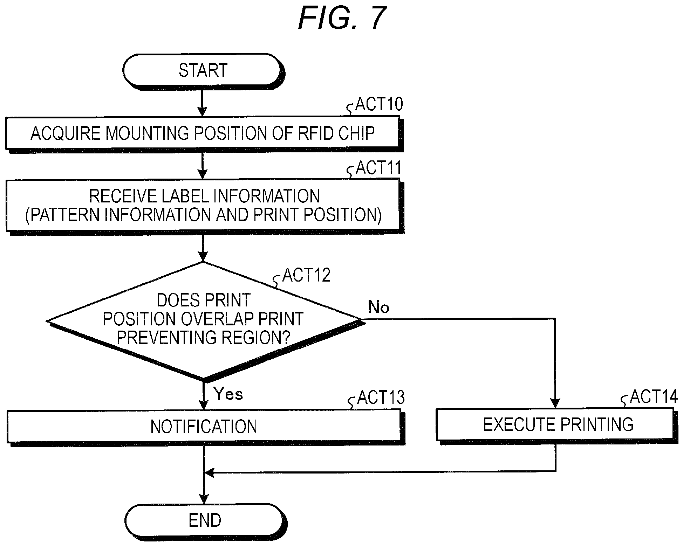

FIG. 7 is a flowchart illustrating an example of a flow of the printing process that is executed by the RFID printer apparatus 10.

First, the chip position acquisition unit 40a acquires the mounting position of the RFID chip 31 from the storage unit 50 (ACT 10).

Next, the print information reception unit 40b receives the label information 52 (the pattern information 35 and the print position of the pattern information 35) from the storage unit 50 (ACT 11). The label information 52 received by the print information reception unit 40b may be the label information 52 generated by the label information generation unit 40d instead of the label information 52 stored in the storage unit 50.

The print controller 40c determines whether or not the print position of the pattern information 35 overlaps the print preventing region 33 (ACT 12). When the print controller 40c determines that the print position of the pattern information 35 overlaps the print preventing region 33 (ACT 12: Yes), the process proceeds to ACT 13. On the other hand, when the print controller 40c determines that the print position of the pattern information 35 does not overlap the print preventing region 33 (ACT 12: No), the process proceeds to ACT 14.

When the print controller 40c determines that the print position of the pattern information 35 overlaps the print preventing region 33 in ACT 12, the notification processing unit 40f executes notification by displaying the determination result on the monitor 61 in ACT 13. Next, the RFID printer apparatus 10 ends the process of FIG. 7.

When the print controller 40c determines that the print position of the pattern information 35 does not overlap the print preventing region 33 in ACT 12, the print controller 40c prints the pattern information 35 in ACT 14. Next, the RFID printer apparatus 10 ends the process of FIG. 7.

### Flow of Dot Missing Check

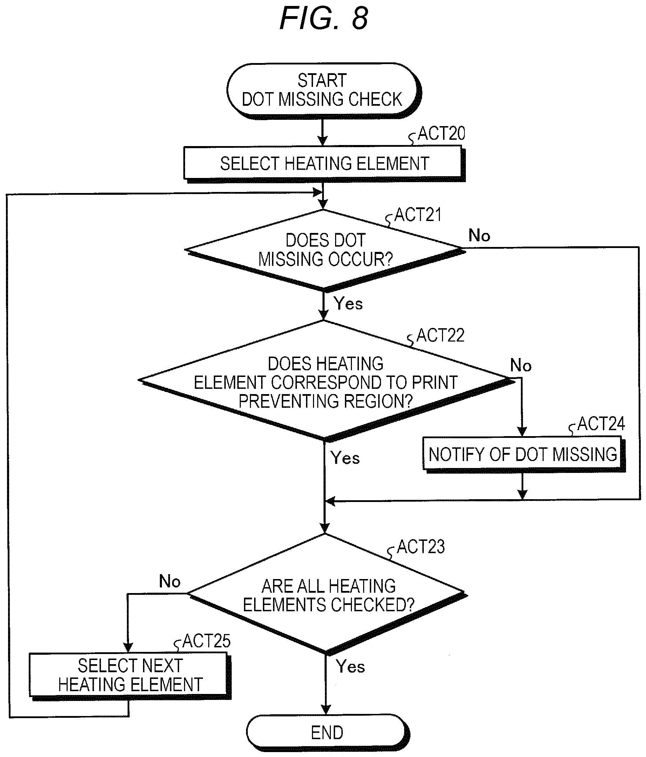

FIG. 8 is a flowchart illustrating an example of a flow of the dot missing check that is executed by the RFID printer apparatus 10. The dot missing check unit 40e executes the dot missing check illustrated in FIG. 8 at a predetermined timing.

The dot missing check unit 40e selects a heating element on which the dot missing check is to be executed (ACT 20).

The dot missing check unit 40e determines whether or not dot missing occurs in the selected heating element (ACT 21). When the dot missing check unit 40e determines that dot missing occurs in the selected heating element (ACT 21: Yes), the process proceeds to ACT 22. On the other hand, when the dot missing check unit 40e determines that dot missing does not occur in the selected heating element (ACT 21: No), the process proceeds to ACT 23. Whether or not dot missing occurs is determined using the above-described method.

When the dot missing check unit 40e determines that dot missing occurs in the selected heating element in ACT 21, the dot missing check unit 40e determines whether or not the heating element determined that dot missing occurs is a heating element corresponding to (overlapping) the print preventing region 33 in ACT 22. When the dot missing check unit 40e determines that the heating element determined that dot missing occurs is a heating element corresponding to the print preventing region 33 (ACT 22: Yes), the process proceeds to ACT 23. That is, the dot missing check unit 40e skips reading of the result of the dot missing check for the heating element corresponding to the print preventing region 33. On the other hand, when the dot missing check unit 40e determines that the heating element determined that dot missing occurs is not a heating element corresponding to the print preventing region 33 (ACT 22: No), the process proceeds to ACT 24.

When the dot missing check unit 40e determines that the heating element determined that dot missing occurs is a heating element corresponding to the print preventing region 33 in ACT 22, the dot missing check unit 40e determines whether or not all the heating elements 70a to 70n are checked in ACT 23. When the dot missing check unit 40e determines that all the heating elements 70a to 70n are checked (ACT 23: Yes), the RFID printer apparatus 10 ends the process of FIG. 8. On the other hand, when the dot missing check unit 40e determines that all the heating elements 70a to 70n are checked (ACT 23: No), the process proceeds to ACT 25.

On the other hand, when the dot missing check unit 40e determines that the heating element determined that dot missing occurs is not a heating element corresponding to the print preventing region 33 in ACT 22, the notification processing unit 40f performs a notification process for notifying of dot missing in ACT 24. Next, the process proceeds to ACT 23.

When the dot missing check unit 40e determines that all the heating elements 70a to 70n are not checked in ACT 23, the dot missing check unit 40e selects the next heating element on which the dot missing check is to be executed in ACT 25. Next, the process returns to ACT 21 and the above-described processes are repeated.

Although not illustrated in FIG. 8, the dot missing check may not be executed on the heating element corresponding to (overlapping) the print preventing region 33 (for example, the heating element in the range of the x-axis direction position xa to the x-axis direction position xb in FIG. 5) . That is, in ACT 20 of FIG. 8, the heating element corresponding to the print preventing region 33 may not be selected.

As described above, in the RFID printer apparatus 10 , the chip position acquisition unit 40a (acquisition unit) acquires the mounting position of the RFID chip 31 in the RFID label 30 (RFID tag), and the print information reception unit 40b (reception unit) receives the label information 52 including the pattern information 35 and the print position of the pattern information 35. The print controller 40c (print control unit) prints the pattern information 35 on the RFID label 30 on a condition that the print position of the pattern information 35 that is received by the print information reception unit 40b does not overlap the region where the RFID chip 31 passes through the RFID label 30 when the RFID chip 31 mounted on the mounting position that is acquired by the chip position acquisition unit 40a moves along the conveying direction Y. Accordingly, it is possible to provide the RFID printer apparatus 10 that can print the label information 52 on a position of the RFID label 30 other than the mounting position of the thick RFID chip 31 with a simple structure in which an adjustment mechanism or the like for a head pressure is not required, the RFID chip 31 being mounted on the RFID label 30.

In addition, in the RFID printer apparatus 10, the print information reception unit 40b (reception unit) causes the notification processing unit 40f (notification unit) to execute notification and inhibits the print controller 40c (print control unit) from printing the pattern information 35 on a condition that the print position of the received pattern information 35 overlaps the region where the RFID chip 31 passes through the RFID label 30 when the RFID chip 31 mounted on the mounting position that is acquired by the chip position acquisition unit 40a moves along the conveying direction Y. Accordingly, it is possible to adopt the configuration in which the pattern information 35 is not printed on the region where the thick RFID chip 31 passes when moving along the conveying direction Y.

In addition, in the RFID printer apparatus 10, when the dot missing check unit 40e (check unit) execute the dot missing check of the thermal head 70 by checking states of the plurality of heating elements 70a to 70n, the dot missing check unit 40e skips reading of the result of the dot missing check on a heating element at a position corresponding to the mounting position of the RFID chip 31 that is acquired by the chip position acquisition unit 40a (acquisition unit). Accordingly, even when disconnection or the like occurs in the heating element due to a contact in a range where the thermal head 70 comes into contact with the RFID chip 31, the user of the RFID printer apparatus 10 can continuously use the RFID printer apparatus 10.

In addition, in the RFID printer apparatus 10, when the dot missing check unit 40e (check unit) execute the dot missing check of the thermal head 70 by checking states of the plurality of heating elements 70a to 70n, the dot missing check unit 40e does not execute the dot missing check on a heating element at a position corresponding to the mounting position of the RFID chip 31 that is acquired by the chip position acquisition unit 40a (acquisition unit) . Accordingly, even when disconnection or the like occurs in the heating element due to a contact in a range where the thermal head 70 comes into contact with the RFID chip 31, the user of the RFID printer apparatus 10 can continuously use the RFID printer apparatus 10.

In addition, the RFID printer apparatus 10 further includes the label information generation unit 40d (generation unit) that generates the label information 52 (the pattern information 35 and the print position of the pattern information 35). Accordingly, the user of the RFID printer apparatus 10 can generate the label information 52 while using the RFID printer apparatus 10.

In addition, in the RFID printer apparatus 10, the label information generation unit 40d (generation unit) causes the notification processing unit 40f (notification unit) to execute notification on a condition that the print position of the generated pattern information 35 overlaps the region where the RFID chip 31 passes through the RFID label 30 when the RFID chip 31 mounted on the mounting position that is acquired by the chip position acquisition unit 40a moves along the conveying direction Y. Accordingly, when the generated pattern information 35 overlaps the print preventing region 33, the print position can be modified before printing.

## Claims

1. An RFID printer apparatus (10) configured to arrange a plurality of RFID tags mounted with an RFID chip (31) in an aligned state and print pattern information on each of the RFID tags (30) while conveying the RFID tags (30) in a predetermined conveying direction and including a thermal head in which a plurality of heating elements is provided along a direction orthogonal to the conveying direction, the apparatus comprising:
acquisition means (40a) configured to acquire a mounting position of the RFID chip (31) in the RFID tag (30) ;
reception means (40b) configured to receive label information including the pattern information and a print position of the pattern information; and
print control means (40) configured to print the pattern information on the RFID tag (30) on a condition that the print position of the pattern information that is received by the reception means (40b) does not overlap a print preventing region (33) when the RFID chip mounted on the mounting position that is acquired by the acquisition means (40a) moves along the conveying direction;
wherein the print preventing region (33) is set based on the mounting position of the RFID chip (31) that is acquired by the chip position acquisition unit (40a).

2. The apparatus according to claim 1, wherein
the reception means (40b) is further configured to cause notification means (40f) to execute notification and inhibits the print control means (40) from printing the pattern information on a condition that the print position of the received pattern information overlaps the print preventing region (33) when the RFID chip (31) mounted on the mounting position that is acquired by the acquisition means moves along the conveying direction.

3. The apparatus according to claim 1 or 2, further comprising
check means (40e) configured to execute a dot missing check of the thermal head by checking states of the plurality of heating elements, wherein
the check means (40e) is further configured to skip reading of a result of a dot missing check on a heating element at a position corresponding to the mounting position of the RFID chip (31) that is acquired by the acquisition means among the plurality of heating elements.

4. The apparatus according to any of claims 1 to 3, further comprising:
check means (40e) configured to execute a dot missing check of the thermal head by checking states of the plurality of heating elements, wherein
the check means (40e) is further configured to not execute a dot missing check on a heating element at a position corresponding to the mounting position of the RFID chip (31) that is acquired by the acquisition means (40a) among the plurality of heating elements.

5. The apparatus according to any of claims 1 to 4, further comprising generation means (40d) configured to generate the label information.

6. The apparatus according to claim 5, wherein
the generation means (40d) is further configured to cause notification means (40f) to execute notification on a condition that the print position of the generated pattern information overlaps the print preventing (33) when the RFID chip (31) mounted on the mounting position that is acquired by the acquisition means (40a) moves along the conveying direction.

## Patentansprüche

1. RFID-Druckereinrichtung (10), die dazu konfiguriert ist, eine Vielzahl von RFID-Markierungen, die mit einem RFID-Chip (31) befestigt sind, in einem ausgerichteten Zustand anzuordnen und Musterinformationen auf jeder der RFID-Markierungen (30) zu drucken, während die RFID-Markierungen (30) in einer vorbestimmten Förderrichtung befördert werden, und einschließlich eines Thermalkopfes, in dem eine Vielzahl von Heizelementen entlang einer Richtung senkrecht zur Förderrichtung bereitgestellt ist, wobei die Einrichtung umfasst:
Erfassungsmittel (40a), die zum Erfassen einer Befestigungsposition des RFID-Chips (31) in der RFID-Markierung (30) konfiguriert sind;
Empfangsmittel (40b), die zum Empfangen von Etiketteninformationen konfiguriert sind, die die Musterinformationen und eine Druckposition der Musterinformationen einschließen; und
Drucksteuerungsmittel (40), die dazu konfiguriert sind, die Musterinformationen auf der RFID-Markierung (30) unter einer Bedingung zu drucken, dass die Druckposition der Musterinformationen, die von den Empfangsmitteln (40b) empfangen wird, sich nicht mit einem Druckverhinderungsbereich (33) überlappt, wenn sich der RFID-Chip, der an der von den Erfassungsmitteln (40a) erfassten Befestigungsposition befestigt ist, entlang der Förderrichtung bewegt;
wobei der Druckverhinderungsbereich (33) auf der Grundlage der Befestigungsposition des RFID-Chips (31), die von der Chippositionserfassungseinheit (40a) erfasst wird, eingestellt wird.

2. Einrichtung nach Anspruch 1, wobei
die Empfangsmittel (40b) weiter dazu konfiguriert sind, Benachrichtigungsmittel (40f) zu veranlassen, eine Benachrichtigung auszuführen, und die Drucksteuerungsmittel (40) daran hindern, die Musterinformationen unter einer Bedingung zu drucken, dass die Druckposition der empfangenen Musterinformationen sich mit dem Druckverhinderungsbereich (33) überlappt, wenn sich der RFID-Chip (31), der an der von den Erfassungsmitteln erfassten Befestigungsposition befestigt ist, entlang der Förderrichtung bewegt.

3. Einrichtung nach Anspruch 1 oder 2, weiter umfassend
Prüfmittel (40e), die dazu konfiguriert sind, eine Überprüfung fehlender Punkte des Thermalkopfes durch Überprüfen von Zuständen der Vielzahl von Heizelementen auszuführen, wobei
die Prüfmittel (40e) weiter dazu konfiguriert sind, eine Lesung eines Ergebnisses einer Prüfung fehlender Punkte auf einem Heizelement, unter der Vielzahl von Heizelementen, an einer Position zu überspringen, die der von den Erfassungsmitteln erfassten Befestigungsposition des RFID-Chips (31) entspricht.

4. Einrichtung nach einem der Ansprüche 1 bis 3, weiter umfassend:
Prüfmittel (40e), die dazu konfiguriert sind, eine Überprüfung fehlender Punkte des Thermalkopfes durch Überprüfen von Zuständen der Vielzahl von Heizelementen auszuführen, wobei
die Prüfmittel (40e) weiter dazu konfiguriert sind, eine Prüfung fehlender Punkte auf einem Heizelement, unter der Vielzahl von Heizelementen, an einer Position nicht auszuführen, die der von den Erfassungsmitteln (40a) erfassten Befestigungsposition des RFID-Chips (31) entspricht.

5. Einrichtung nach einem der Ansprüche 1 bis 4, weiter umfassend Erzeugungsmittel (40d), die dazu konfiguriert sind, die Etiketteninformationen zu erzeugen.

6. Einrichtung nach Anspruch 5, wobei
die Erzeugungsmittel (40d) weiter dazu konfiguriert sind, Benachrichtigungsmittel (40f) zu veranlassen, eine Benachrichtigung unter einer Bedingung auszuführen, dass die Druckposition der erzeugten Musterinformationen sich mit der Druckverhinderung (33) überlappt, wenn sich der RFID-Chip (31), der an der von den Erfassungsmitteln (40a) erfassten Befestigungsposition befestigt ist, entlang der Förderrichtung bewegt.

## Revendications

1. Appareil d'imprimante RFID (10) configuré pour agencer une pluralité d'étiquettes RFID montées avec une puce RFID (31) dans un état aligné et des informations de motif d'impression sur chacune des étiquettes RFID (30) tout en transportant les étiquettes RFID (30) dans une direction de transport prédéterminée et incluant une tête thermique dans laquelle une pluralité d'éléments chauffants est disposé le long d'une direction orthogonale à la direction de transport, l'appareil comprenant :
un moyen d'acquisition (40a) configuré pour acquérir une position de montage de la puce RFID (31) dans l'étiquette RFID (30) ;
un moyen de réception (40b) configuré pour recevoir des informations d'étiquette incluant les informations de motif et une position d'impression des informations de motif ; et
un moyen de commande d'impression (40) configuré pour imprimer les informations de motif sur l'étiquette RFID (30) à condition que la position d'impression des informations de motif qui sont reçues par le moyen de réception (40b) ne chevauchent pas une région de prévention d'impression (33) lorsque la puce RFID montée à la position de montage qui est acquise par le moyen d'acquisition (40a) se déplace le long de la direction de transport ;
dans lequel la région de prévention d'impression (33) est définie sur la base de la position de montage de la puce RFID (31) qui est acquise par le moyen d'acquisition de position de puce (40a).

2. Appareil selon la revendication 1, dans lequel
le moyen de réception (40b) est en outre configuré pour amener un moyen de notification (40f) à exécuter une notification et empêche le moyen de commande d'impression (40) d'imprimer les informations de motif à condition que la position d'impression des informations de motif reçues chevauche la région de prévention d'impression (33) lorsque la puce RFID (31) montée à la position de montage qui est acquise par le moyen d'acquisition se déplace le long de la direction de transport.

3. Appareil selon la revendication 1 ou 2, comprenant en outre
un moyen de vérification (40e) configuré pour exécuter une vérification de manque de point de la tête thermique en vérifiant des états de la pluralité d'éléments chauffants, dans lequel
le moyen de vérification (40e) est en outre configuré pour sauter la lecture d'un résultat d'une vérification de manque de point sur un élément chauffant à une position correspondant à la position de montage de la puce RFID (31) qui est acquise par le moyen d'acquisition parmi la pluralité d'éléments chauffants.

4. Appareil selon l'une quelconque des revendications 1 à 3, comprenant en outre :
un moyen de vérification (40e) configuré pour exécuter une vérification de manque de point de la tête thermique en vérifiant des états de la pluralité d'éléments chauffants, dans lequel
le moyen de vérification (40e) est en outre configuré pour ne pas exécuter une vérification de manque de point sur un élément chauffant à une position correspondant à la position de montage de la puce RFID (31) qui est acquise par le moyen d'acquisition (40a) parmi la pluralité d'éléments chauffants.

5. Appareil selon l'une quelconque des revendications 1 à 4, comprenant en outre un moyen de génération (40d) configuré pour générer les informations d'étiquette.

6. Appareil selon la revendication 5, dans lequel
le moyen de génération (40d) est en outre configuré pour amener un moyen de notification (40f) à exécuter une notification à condition que la position d'impression des informations de motif générées chevauche la région de prévention d'impression (33) lorsque la puce RFID (31) montée à la position de montage qui est acquise par le moyen d'acquisition (40a) se déplace le long de la direction de transport.
